# EUROPÄISCHE PATENTSCHRIFT

(11) **EP 4 165 482 B1**
(45) Veröffentlichungstag und Bekanntmachung des Hinweises auf die Patenterteilung: **29.10.2025**
(21) Anmeldenummer: 21732252.8
(22) Anmeldetag: 09.06.2021
(51) Int. Cl.: G05B 19/418

(54) **PRODUKTIONSSTEUERUNG MIT FÄHIGKEITS- BZW. HERSTELLERABGLEICH**
PRODUCTION CONTROL WITH A COMPARISON OF CAPABILITIES OR PRODUCERS
COMMANDE DE PRODUCTION UTILISANT UNE COMPARAISON DE CAPACITÉS OU DE PRODUCTEURS

(30) Priorität: 10.06.2020 DE 102020207298
(43) Veröffentlichungstag der Anmeldung: 19.04.2023
(73) Patentinhaber: TRUMPF SE + Co. KG, 71254 Ditzingen (DE); TRUMPF Werkzeugmaschinen SE + Co. KG, 71254 Ditzingen (DE)
(72) Erfinder: SAUTER, Philipp, 70499 Stuttgart (DE); GUENTNER, Florian, 73113 Ottenbach (DE); MIETH, Carina, 70839 Gerlingen (DE); ROLLE, Maximilian, 70839 Gerlingen (DE)
(74) Vertreter: Trumpf Patentabteilung
(86) Internationale Anmeldenummer: PCT/EP2021/065429
(87) Internationale Veröffentlichungsnummer: WO 2021/250080

(56) Entgegenhaltungen:
- WO-A1-2019/078875
- CN-A- 106 933 200
- CN-B- 104 504 540
- US-A1- 2005 096 957
- US-A1- 2017 220 016
- ANONYMOUS: "Genetic algorithm - Wikipedia", 5 June 2020 (2020-06-05), XP055839904, Retrieved from the Internet <URL:https://en.wikipedia.org/w/index.php?title=Genetic_algorithm&oldid=960800816> [retrieved on 20210910]

## Beschreibung

### Hintergrund der Erfindung

Die Erfindung betrifft ein Verfahren zur Steuerung einer Blechbearbeitung und ein Computerprogrammprodukt für ein solches Verfahren.

Die Produktionsplanung und -steuerung in der Blechbearbeitung erfolgt derzeit weitestgehend manuell. Dabei werden von einem Experten vor Produktionsbeginn zu fertigende Blechbauteile nacheinander verschiedenen Werkzeugmaschinen zur Bearbeitung zugewiesen.

Aus der WO 2015/058147 A1 ist ein Verfahren zur Bestimmung der Herstellungskosten eines Bauteils bekannt geworden. Hierzu werden die CAD-Daten des Bauteils von einem Konstrukteur an einen einzelnen potentiellen Hersteller des Bauteils übermittelt. Basierend auf den freien Kapazitäten des Herstellers und den geschätzten Herstellungskosten für das Bauteil erhält der Konstrukteur ein Angebot zur Herstellung des Bauteils. Dieses Angebot ist während des Konstruktionsverfahrens laufend aktualisierbar.

US 10,338,565 B1, US 10,281,902 B2 und US 10,061,300 B1 offenbaren Verfahren zur Prognose der Fertigungszeit und Fertigungskosten eines Bauteils anhand von dessen CAD-Daten. Die Prognosen basieren auf verschiedenen machine-learning-Modellen.

Aus der DE 20 2009 014 918 U1 ist eine Optimierungseinrichtung bekannt geworden. Die Optimierungseinrichtung stellt Restbereiche von Blechtafeln für Nachfrager zur Verfügung, um das Material der Blechtafel optimal zu nutzen.

In der Zeitschrift "Blech 06/2010" wird auf den Seiten 42 bis 46 eine weitestgehend automatische Angebotserstellung und Fertigungszuweisung in der Blechbearbeitung beschrieben.

Die US 2014/0067108 A1 offenbart eine Fertigungssteuerung, die den Zustand verschiedener Produktionsmaschinen berücksichtigt.

Die US 2017/220016 A1 offenbart ein Verfahren zur Produktion mit Energiekonsumierenden Maschinen.

Die US 2005/096957 A1 offenbart ein Verfahren zum Umverteilen von Produktionsaufträgen.

Die WO 2019/078875 A1 offenbart ein Verfahren zum Planen von Jobs für einen Industrieprozess.

Die CN 106 933 200 A offenbart ein Verfahren zum Planen von Jobs mit einem genetischen Algorithmus.

Die CN 104 504 540 B offenbart ein Verfahren zum Planen von Jobs mit einem mehrstufigen Optimierungsalgorithmus.

Eine Reaktion auf unvorhersagbare Ereignisse, wie beispielsweise dem Ausfall einer Werkzeugmaschine, ist bei den bekannten Produktionsplanungen oftmals nur aufwändig möglich. Weiterhin erfolgt die komplexe Produktionsplanung oftmals nicht optimal hinsichtlich des eingesetzten Materials, der Werkzeugmaschinenauslastung und/oder der Produktionskosten.

### Aufgabe der Erfindung

Es ist daher Aufgabe der Erfindung, ein Verfahren und ein Computerprogrammprodukt bereit zu stellen, das die Blechbearbeitung signifikant verbessert.

### Beschreibung der Erfindung

Diese Aufgabe wird erfindungsgemäß gelöst durch ein Verfahren gemäß Patentanspruch 1 und ein Computerprogrammprodukt gemäß Patentanspruch 15. Die Unteransprüche geben bevorzugte Ausgestaltungen wieder.

Die erfindungsgemäße Aufgabe wird somit durch ein Verfahren zur Produktionsplanung eines zu fertigenden Blechbauteils gelöst, wobei das Verfahren das Einlesen von Werkzeugmaschinendaten und Daten des zu fertigenden Blechbauteils, das Erstellen einer Werkzeugmaschinenmatrix aus geeigneten Werkzeugmaschinen, das Bestimmen eines optimierten Bearbeitungsablaufs in Form einer Abfolge von Werkzeugmaschinen aus der Werkzeugmaschinenmatrix sowie das Ausgeben des optimierten Bearbeitungsablaufs umfasst.

Erfindungsgemäß ist es somit vorgesehen, eine Matrix aus Werkzeugmaschinen aufzustellen. Dabei können die Spalten der Matrix die Bearbeitungsschritte des Blechbauteils wiedergeben und in den Zeilen der Matrix können die verschiedenen, für den jeweiligen Bearbeitungsschritt geeigneten Werkzeugmaschinen gelistet sein. Alternativ dazu können die Zeilen der Matrix die Bearbeitungsschritte des Blechbauteils wiedergeben und in den Spalten der Matrix können die verschiedenen, für den jeweiligen Bearbeitungsschritt geeigneten Werkzeugmaschinen gelistet sein. Das Bestimmen eines vorteilhaften Weges (Produktionsgraph) durch die Werkzeugmaschinenmatrix erlaubt die signifikant verbesserte Herstellung des Blechbauteils.

Vorzugsweise wird das erfindungsgemäße Verfahren von einem Algorithmus durchgeführt. Das Verfahren, insbesondere der Algorithmus, kann cloud-basiert ausgeführt werden.

Das Einlesen der Werkzeugmaschinendaten und der Daten des zu fertigenden Blechbauteils umfasst das Einlesen von Bearbeitungsschritten und Eigenschaftsparametern des zu fertigenden Blechbauteils sowie von Bearbeitungsgrundfähigkeiten und Fähigkeitsparametern der Werkzeugmaschinen. Bearbeitungsschritte können beispielsweise Trennen, bspw. mittels Stanzen, Laserschneiden, Plasmaschneiden oder Wasserstrahlschneiden, Umformen, bspw. mittels Biegen oder Tiefziehen, Schweißen, Markieren, bspw. mittels Lasermarkieren oder Prägen, usw. sein. Eigenschaftsparameter können beispielsweise Abmessungen, Material und/oder Gewicht des Blechbauteils sein. Bearbeitungsgrundfähigkeiten sind beispielsweise die Eignung zum Trennen oder Umformen. Fähigkeitsparameter sind beispielsweise die Fähigkeit zur Aufnahme und Bearbeitung bestimmter Blechbauteilgrößen und/oder -gewichte. Fähigkeitsparameter können beispielsweise die Verfügbarkeit, die Kapazität, die Geschwindigkeit und/oder die Präzision der Werkzeugmaschine sein. Mit Bearbeitungsgrundfähigkeiten ist somit keine spezifische Technologie (Laserschneiden, Tiefziehen etc.) sondern nur die notwendige Bearbeitungsaufgabe gemeint. Bleche trennen kann bspw. eine Stanzmaschine, aber auch eine Laserschneidmaschine. Umformen kann bspw. eine Biegemaschine und eine Stanzmaschine (z.B. für kurze Laschen).

Zum Erstellen der Werkzeugmaschinenmatrix wird zunächst ein Abgleich der Bearbeitungsschritte mit den Bearbeitungsgrundfähigkeiten vorgenommen. Falls die Bearbeitungsgrundfähigkeit der Werkzeugmaschine dem Bearbeitungsschritt entspricht, d.h. falls die jeweilige Werkzeugmaschine den Bearbeitungsschritt durchführen kann, wird ein Abgleich der Eigenschaftsparameter des zu fertigenden Blechbauteils mit den Fähigkeitsparametern der jeweiligen Werkzeugmaschine vorgenommen. Erfüllen die Fähigkeitsparameter der jeweiligen Werkzeugmaschine die Eigenschaftsparameter des zu fertigenden Blechbauteils, wird die Werkzeugmaschine in die Werkzeugmaschinenmatrix aufgenommen. Das Erstellen der Werkzeugmaschinenmatrix erfolgt somit zumindest zweistufig.

Ein Beispiel für einen erfindungsgemäßen Algorithmus lautet wie folgt:

```
 Wenn (Bearbeitungsgrundfähigkeit = Bearbeitungsschritt){
   Dann Stufe 1 erreicht.
   Wenn (Fähigkeitsparameter 1 = Eigenschaftsparameter 1){
           Dann Stufe 2 erreicht.
           Wenn (Fähigkeitsparameter 2 = Eigenschaftsparameter 2){
                       Dann Stufe 3 erreicht.
                       Wenn (Fähigkeitsparameter 3 = Eigenschaftsparameter
                       3){
                                   Dann wird Werkzeugmaschine der Werk-
                                   zeugmaschinenmatrix hinzugefügt.
```

Die Bearbeitungsschritte des zu fertigenden Blechbauteils werden vorteilhafterweise einem 3D-Modell des zu fertigenden Blechbauteils und/oder einer Zeichnung des zu fertigenden Blechbauteils entnommen. Insbesondere kann zur Konkretisierung der Bearbeitungsschritte auf im 3D-Modell und/oder in der Zeichnung hinterlegte Toleranzen zurückgegriffen werden.

Die Bearbeitungsschritte können in eine Hauptgruppe und zumindest eine Untergruppe, insbesondere mehrere Untergruppen, unterteilt sein. Die Hauptgruppe kann dabei Bearbeitungsschritte nach DIN 8580 umfassen. Die Hauptgruppe umfasst besonders bevorzugt die Bearbeitungsschritte "Trennen", "Umformen", "Fügen" und/oder "Beschichten". Die Untergruppe(n) kann/können Konkretisierungen dieser Bearbeitungsschritte umfassen. Beispielsweise kann der Bearbeitungsschritt "Trennen" in der ersten Untergruppe "Schneiden" und "Stanzen" umfassen. In der zweiten Untergruppe kann beispielsweise der Bearbeitungsschritt "Schneiden" der ersten Untergruppe die Bearbeitungsschritte "Laserschneiden" und "Wasserstrahlschneiden" umfassen.

Das Auffinden eines optimalen Produktionsgraphen wird als Lösung eines job-shop-scheduling-problems (JSSP) bezeichnet. Lösungen und Heuristiken hierzu finden sich in folgenden Veröffentlichungen:
F. Pfitzer, J. Provost, C. Mieth, and W. Liertz, "Event-driven production rescheduling in job shop environments", in 2018 IEEE 14th International Conference on Automation Science and Engineering (CASE), IEEE, 2018, pp. 939-944;
C. Mieth, N. Schmid, A. Meyer, "Simulationsbasierte Untersuchung von Prioritäts-und Kommissionierregeln zur Steuerung des Materialflusses in der Blechindustrie";
L. L. Li, C. B. Li, L. Li, Y. Tang, and Q. S. Yang, "An integrated approach for remanufacturing job shop scheduling with routing alternatives.", Mathematical biosciences and engineering: MBE, vol. 16, no. 4, pp. 2063-2085, 2019;
M. Gondran, M.-J. Huguet, P. Lacomme, and N. Tchernev, "Comparison between two approaches to solve the job-shop scheduling problem with routing", 2019;
J. J. van Hoorn, "The current state of bounds on benchmark instances of the job-shop scheduling problem", Journal of Scheduling, vol. 21, no. 1, pp. 127-128, 2018;
S.-C. Lin, E. D. Goodman, and W. F. Punch III, "A genetic algorithm approach to dynamic job shop scheduling problem", in ICGA, 1997, pp. 481-488;
T. Yamada and R. Nakano, "Scheduling by genetic local search with multi-step crossover", in International Conference on Parallel Problem Solving from Nature, Springer, 1996, pp. 960- 969;
B. M. Ombuki and M. Ventresca, "Local search genetic algorithms for the job shop scheduling problem", Applied Intelligence, vol. 21, no. 1, pp. 99-109, 2004;
E. S. Nicoara, F. G. Filip, and N. Paraschiv, "Simulation-based optimization using genetic algorithms for multi-objective flexible jssp", Studies in Informatics and Control, vol. 20, no. 4, pp. 333-344, 2011;
L. Asadzadeh, "A local search genetic algorithm for the job shop scheduling problem with intelligent agents", Computers & Industrial Engineering, vol. 85, pp. 376-383, 2015;
B. Waschneck, A. Reichstaller, L. Belzner, T. Altenmüller, T. Bauernhansl, A. Knapp, and Kyek, "Optimization of global production scheduling with deep reinforcement learning", Procedia CIRP, vol. 72, pp. 1264-1269, 2018;
M. Botvinick, S. Ritter, J. X. Wang, Z. Kurth-Nelson, C. Blundell, and D. Hassabis, "Reinforcement learning, fast and slow", Trends in cognitive sciences, 2019.

Das Bestimmen des optimierten Bearbeitungsablaufs, also des optimierten Produktionsgraphen, erfolgt vorzugsweise durch eine künstliche Intelligenz, vorzugsweise in Form eines neuronalen Netzes. Das neuronale Netz kann mittels machine-learning trainiert sein und/oder werden. Neuronale Netze sind dem Fachmann beispielsweise bekannt aus:
Günter Daniel Rey, Karl F. Wender, "Neuronale Netze", 2. Auflage, 2010, Huber.

Zum Bestimmen des optimierten Bearbeitungsablaufs können die Bearbeitungsschritte (z.B. Trennen, Fügen) den Ressourcen (Maschinen) zugewiesen werden. Diese Zuweisung kann über folgende Aufgaben geschehen:
- Assoziation: Assoziationsregeln und Bayessche Netze,
- Klassifikation: Entscheidungsbäume und neuronale Netze.

Die Offenbarung der zuvor zitierten Veröffentlichungen wird vollumfänglich in die vorliegende Beschreibung aufgenommen (incorporated by reference).

Die Ausgabe des optimierten Bearbeitungsablaufs kann mittelbar oder unmittelbar an ein manufacturing-execution-system (MES) erfolgen. Hierdurch kann der Produktionsplan direkt an den Werkzeugmaschinen umgesetzt werden.

Alternativ oder zusätzlich kann die Ausgabe auf ein Display von Markern eines indoor-Lokalisierungssystems erfolgen. Dies ermöglicht eine dezentrale Steuerung im laufenden Betrieb.

Die Ausgabe des optimierten Bearbeitungsablaufs kann die Herstellbarkeit des Blechbauteils beinhalten. Sollte kein Bearbeitungsablauf möglich sein, so ist das Blechbauteil nicht herstellbar.

In besonders bevorzugter Ausgestaltung der Erfindung umfasst das Einlesen von Daten des Blechbauteils das Erfassen der Position des Blechbauteils, insbesondere mittels eines indoor-Lokalisierungssystems. Das indoor-Lokalisierungssystem kann mehrere tags (Anker) aufweisen, die von mehreren im Raum verteilten Empfängereinheiten lokalisiert werden. Die tags sind vorzugsweise zu fertigenden Blechbauteilen zugeordnet, insbesondere an Blechbauteilen oder ihren Behältern angebracht. Im Fall eines indoor-Lokalisierungssystems kann die Planung automatisiert weiter optimiert werden.

Der Bearbeitungsablauf wird vorzugsweise auf minimierte Bearbeitungskosten, minimierte Bearbeitungszeit und/oder minimierten Materialverbrauch optimiert. Mit Bearbeitungszeit ist dabei vorzugsweise nicht die Zeit gemeint, die eine Werkzeugmaschine für die Fertigungsschritte benötigt, sondern zumindest die Gesamtzeit gemeint, die eine Werkzeugmaschine für einen Auftrag benötigt. Aus der Bearbeitungszeit ergibt sich somit, wie viele Aufträge pro Werkzeugmaschine und Zeiteinheit erledigbar sind. Weiter bevorzugt umfasst die Bearbeitungszeit weiterhin die Intralogistik und damit in Summe die Durchlaufzeit für Aufträge, je nach beteiligten Werkzeugmaschinen. D.h. wie lange brauchen in Summe die Aufträge von Rohmaterialeingang zur Werkzeugmaschine, zwischen den Werkzeugmaschinen und dann zum Kommissionieren bei einem Lieferanten. Es muss also in diesem Fall ein Routing von Rohmaterial/Zwischenprodukten/Endprodukten zwischen Lieferanten und Kunde und innerhalb eines Werks eines Kunden berücksichtigt werden. Dabei können diesen Zielgrößen gleiche Kenngrößen zugewiesen werden, um sie miteinander vergleichbar zu machen. Beispielsweise kann der Bearbeitungszeit und/oder dem Materialverbrauch ein Preis zugewiesen werden, sodass sie gegenüber den Bearbeitungskosten gewichtet werden können.

In weiter bevorzugter Ausgestaltung der Erfindung sind zumindest zwei Werkzeugmaschinen verschiedenen Herstellern zugeordnet. In diesem Fall können die Werkzeugmaschinendaten Herstellerdaten umfassen, die bei der Bestimmung des optimierten Bearbeitungsablaufs berücksichtigt werden können. Alternativ oder zusätzlich dazu können sich zumindest zwei Werkzeugmaschinen an verschiedenen Produktionsstandorten befinden. Hierdurch kann ein Marktplatz zur optimalen Bearbeitung von Blechbauteilen unter Einbezug verschiedener Hersteller bzw. verschiedener Produktionsstandorte geschaffen werden.

Die Werkzeugmaschinendaten können ausschließlich Herstellerdaten aufweisen. Der optimierte Bearbeitungsablauf wird in diesem Fall ausschließlich von den Herstellerdaten bestimmt.

Die Herstellerdaten können Informationen zum Standort der Werkzeugmaschinen aufweisen. Hierdurch können Transport- und Kommissionierungskosten mit in die Bewertung einbezogen werden. Die Herstellerdaten können alternativ oder zusätzlich dazu Informationen zum Materialverbrauch und/oder Energieverbrauch aufweisen. Transport- und/oder Kommissionierungskosten können Angebote von Transportdienstleistern direkt berücksichtigen, aber auch indirekt, bspw. durch Einbindung einer Logistik-Plattform, die die Angebote verschiedener Transportdienstleister vergleicht.

Die Herstellerdaten können die Kapazität und/oder den Materialvorrat des Herstellers enthalten. Alternativ oder zusätzlich dazu können die Herstellerdaten Informationen zur Produktionsgeschwindigkeit der Werkzeugmaschinen aufweisen.

Die Herstellerdaten können Informationen darüber enthalten, ob es sich bei dem Hersteller, der die potentiell eingesetzte Werkzeugmaschine zur Verfügung stellt, um einen Einzelteilhersteller, einen Baugruppenhersteller, einen Hersteller für Commodity-Blechbauteile (stark standardisierte einfache Blechbauteile), einem Hersteller für Schweißbaugruppen und/oder einem Hersteller für Baugruppen mit Zukaufteilen handelt. Die Herstellerdaten können Informationen über den Maschinenpark des Herstellers, die Zertifizierung des Herstellers und/oder die Zukaufdienstleistungen des Herstellers enthalten. Die Herstellerdaten können Informationen über die Anzahl, Art und/oder Qualifikation seiner Mitarbeiter enthalten. Die Herstellerdaten können Informationen über die Industriezweige seiner Kunde enthalten, beispielsweise ob der Hersteller zuvor bereits Blechbauteile für Medizinprodukte bearbeitet hat. Besonders bevorzugt enthalten die Herstellerdaten Informationen zu Qualität und/oder Preis zuvor bearbeiteter Blechbauteile, da diese Informationen besonders aussagekräftig hinsichtlich einer erneuten Beauftragung einer Werkzeugmaschine dieses Herstellers sind. Die Herstellerdaten können Informationen zur Liefergeschwindigkeit und/oder Liefertreue bei der Herstellung zuvor gefertigter Blechbauteile enthalten. Auch diese Informationen sind besonders aussagekräftig. Weiterhin können die Herstellerdaten Informationen darüber enthalten, ob dem Hersteller per se der Vorzug zu geben ist. Hiermit kann bspw. geprüft werden, ob ein Hersteller allein ein Blechbauteil überhaupt fertigen kann. Wird bei der Bestimmung eines optimierten Bearbeitungsablaufs in Schritt C kein Bearbeitungsablauf erhalten, der lediglich Werkzeugmaschinen des bevorzugten Herstellers umfasst, kann er das Blechbauteil nicht allein fertigen. Auf diese Art kann auch anderen Herstellerdaten der Vorzug gegeben werden, um dann zu prüfen, ob eine Fertigung ausschließlich gemäß den bevorzugten Herstellerdaten möglich ist.

Besonders bevorzugt werden die Herstellerdaten anhand einer Beurteilung eines bereits bearbeiteten Blechbauteils ergänzt. Insbesondere können diese Informationen den Preis, die Qualität, die Bearbeitungsgeschwindigkeit und/oder die Liefertermintreue enthalten. Hierdurch kann die Auswahl der Werkzeugmaschinen weiter optimiert werden.

In dem erfindungsgemäßen Verfahren können die Bearbeitungskosten des Blechbauteils bei Anwendung des optimierten Bearbeitungsablaufs ausgegeben werden. Die Bearbeitungskosten werden dabei vorzugsweise durch einen Vergleich mit tatsächlich erzielten Marktpreisen vergleichbarer Blechbauteile ermittelt und/oder mittels einer Algorithmus-basierten Preiskalkulation des zu fertigenden Blechbauteils, insbesondere anhand dessen CAD-Daten.

Weiter bevorzugt umfasst das erfindungsgemäße Verfahren das Bestellen von Material zur Herstellung des Blechbauteils und/oder das Versenden des Blechbauteils nach einem Bearbeitungsschritt. Hierdurch können Materialfluss und/oder Logistik mit optimiert werden. Dabei kann auch die Positionierung/Verknüpfung von Werkzeugmaschinen an einem Produktionsstandort und damit das Routing von Aufträgen mitberücksichtigt werden.

Die Anordnung der Werkzeugmaschinen zueinander spielt also auch innerhalb eines Werks (Produktionsstandorts) eine Rolle, wie auch Redundanzen im Werkzeugmaschinenpark, um eine erhöhte Zuverlässigkeit zu gewährleisten und das Entstehen von (ggfs. zusätzlichen) Bottlenecks bei Werkzeugmaschinenausfällen zu kompensieren.

Das Maschinenrouting kann vorzugsweise durch zwei Konzepte realisiert sein. Das erste Konzept basiert auf dem Ansatz des Pull-Prinzipes, während das Push-Prinzip die Basis für das zweite Konzept bildet.

Im Pull-Prinzip fordert die Werkzeugmaschine eine WorkOrder an, sobald die vorherige WorkOrder die Werkzeugmaschine verlassen hat. Jede Werkzeugmaschine bekommt einen Auftragsanforderungs-Baustein.

Dieser Auftragsanforderungs-Baustein ist gleichzeitig ein Agent und besteht aus einem Enter und einem Queue-Block. Mit einem Enter-Block wird ein bereits existierender Agent, in diesem Fall eine WorkOrder, in einen Prozess eingeschleust. Der Queue-Block ist eine Warteschlange. Diese Warteschlange ist sehr kurz mit idealerweise einer WorkOrder. Die Funktionsweise des Auftragsanforderungs-Bausteines erfolgt über vier Stufen. Wenn eine WorkOrder die Wartschlange verlässt, dann wird über eine Funktion eine neue WorkOrder angefordert. In der nächsten Stufe werden, die für diese Werkzeugmaschine relevante WorkOrders herausgefiltert. Die relevanten WorkOrders erfüllen folgende vier Bedingungen: Sie können von der Werkzeugmaschine bearbeitet werden, sind freigegeben, haben den durchführbaren Bearbeitungsschritt als nächsten Prozessschritt und haben als Status "Neu" oder "Planbar". Es kann nun mehrere relevante WorkOrders geben, die zusammen eine Liste bilden. Im nächsten Schritt werden die Aufträge aus der Liste priorisiert. Dazu werden die vorzugsweise in Kotlin programmierten Prioritätsregeln verwendet. Zuletzt wird die als höchste priorisierte WorkOrder an den Auftragsanforderungs-Baustein weitergegeben.

Das Hauptstellungsmerkmal des Push-Prinzips ist ein zentraler Steuerungsbaustein. Die WorkOrders werden aktiv durch den zentralen Steuerungsbaustein den verschiedenen Werkzeugmaschinen zugeordnet. Es hat den Vorteil, dass verschiedene Routingkonzepte integriert werden können, wie beispielsweise die Pheromone Based Coordination (PHC), das Swarm of Cognitive Agents-Modell (SCA) oder der Queue Length Estimator (QLE). Der zentrale Steuerungsbaustein kommuniziert mit den einzelnen Werkzeugmaschinen und erhält benötigte Informationen. Diese ist zum Beispiel die Warte-schlangenlänge, wenn ein QLE verwendet wird oder bei der PHC der Pheromonwert. Dazu sendet der Steuerungsagent zuerst die Auftragsinformationen zu den Maschinenagenten. Diese verarbeiten diese Information und senden dem Steuerungsagenten ihren Rückgabewert zurück. Der Steuerungsagent sendet den Auftrag schließlich der Werkzeugmaschine mit dem besten Rückgabewert. Es gibt keinen Auftragsanforderungs-Baustein für das Push-Prinzip, sondern einen Auftragsannahme-Baustein, welcher die zugeteilten Aufträge empfängt. Er besteht aus einem Enter- und einem Queue-Block. Allerdings hat die Warteschlange keine Kapazitätslimitierung. Die Filterung und Priorisierung ist im Steuerungsbaustein implementiert.

Das Verfahren kann mit mehreren Blechbauteilen durchgeführt werden. Dabei kann zumindest ein Bearbeitungsschritt eines Blechbauteils verzögert werden, um gemeinsam mit anderen Blechbauteilen bearbeitet oder versendet zu werden. Die Bearbeitung der Blechbauteile kann als Auftragsnetz verstanden werden. Ein Auftragsnetz ist die Verknüpfung von Plan- oder Fertigungsaufträgen über mehrere Fertigungsstufen hinweg. Jeder Auftrag im Auftragsnetz hat dabei eine eigene Auftragsnummer. Durch die gemeinsame Bearbeitung mit anderen Blechbauteilen kann insbesondere das materialsparende Trennen des Blechbauteils aus einer Blechtafel erreicht werden.

Die Herstellerdaten und/oder Werkzeugmaschinendaten und/oder die Daten des zu fertigenden Bauteils können über eine Eingabe-Schnittstelle einer online-Plattform eingelesen werden. Alternativ oder zusätzlich dazu können zumindest ein optimierter Bearbeitungsablauf und/oder gesamte Bearbeitungskosten zur Herstellung des zu fertigenden Bauteils über eine Ausgabe-Schnittstelle einer online-Plattform, vorzugsweise derselben online-Plattform, ausgegeben werden. Die online-Plattform kann dabei in Form eines online-Marktplatzes ausgebildet sein. Das heißt, dass auf diesem Marktplatz eine große Anzahl an Einkäufern ihre Anfrage zur Bestellung von Blechbauteilen eingeben. Der online-Marktplatz generiert einen Vorschlag an geeigneten Herstellern (d.h. auf Basis der Herstellerdaten bzw. Maschinenfähigkeiten). Diese Hersteller haben dann die Option, den Auftrag anzunehmen und/oder bekommen den Auftrag zugewiesen. Sollte ein Hersteller den Auftrag nicht ausführen können, so wird ein alternativer freier Hersteller ausgewählt, der den Auftrag entgegennehmen kann und/oder diesen übertragen bekommt.

Der online-Marktplatz kann mehrere Schnittstellen für mehrere Einkäufer und/oder mehrere Verkäufer aufweisen.

Die erfindungsgemäße Aufgabe wird weiterhin gelöst durch ein Computerprogrammprodukt, umfassend Befehle, die bei der Ausführung eines Programms durch einen Computer diesen veranlassen, das hier beschriebene Verfahren auszuführen.

Das Computerprogrammprodukt kann eine online-Plattform mit einer Eingabe-Schnittstelle zur Eingabe der Werkzeugmaschinendaten, der Herstellerdaten und/oder der Daten des zu fertigenden Bauteils aufweisen. Die online-Plattform kann weiterhin eine Ausgabe-Schnittstelle zur Ausgabe des optimierten Bearbeitungsablaufs und/oder der gesamten Bearbeitungskosten aufweisen. Die online-Plattform kann in Form eines online-Marktplatzes ausgebildet sein. Die online-Plattform kann cloud-basiert ausgebildet sein.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt ein Verfahren zur optimierten Steuerung einer Blechbearbeitung mit mehreren Werkzeugmaschinen, die in einer Werkzeugmaschinenmatrix angeordnet sind.
- Fig. 2: zeigt das Verfahren zum Hinzufügen einer Werkzeugmaschine zu der Werkzeugmaschinenmatrix.
- Fig. 3: zeigt eine online-Plattform zur Bedienung des Verfahrens.

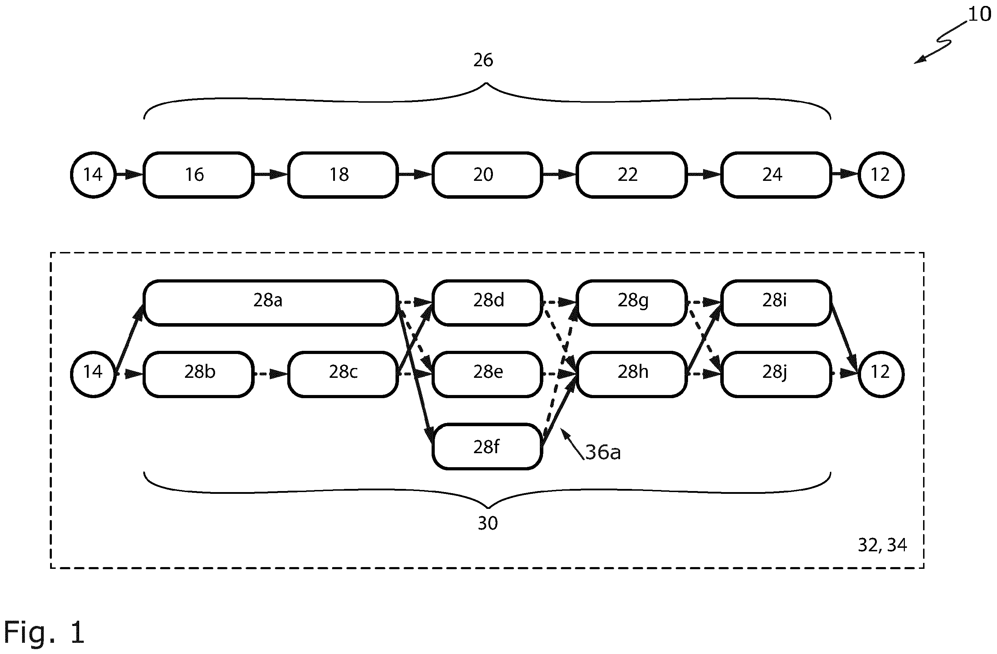

Fig. 1 zeigt ein Verfahren 10 zur optimalen Produktionsplanung und/oder Produktionsdurchführung. Die Produktion umfasst dabei die Herstellung eines Blechbauteils 12 aus einer Blechtafel 14. Im vorliegenden Fall umfasst die Produktion das Laserschneiden 16, das Entgraten 18, das Biegen 20, das Schweißen 22 und das Verpacken 24 des zu fertigenden Blechbauteils 12. Das zu fertigende Blechbauteil 12 durchläuft mithin mehrere Bearbeitungsschritte 26.

Die Bearbeitungsschritte 26 werden durch mehrere hier beispielhafte Werkzeugmaschinen 28a-28j durchgeführt. Die Werkzeugmaschine 28a ist eine Stanz-Laserschneidkombinationsmaschine, die die Bearbeitungsgrundfähigkeiten Schneiden und Entgraten aufweist. Die Werkzeugmaschine 28b ist eine Werkzeugmaschine, deren Bearbeitungsgrundfähigkeit nur Schneiden ist. Die Werkzeugmaschine 28c ist eine Entgratmaschine. Die Werkzeugmaschinen 28d-28f sind Biegemaschinen. Die Werkzeugmaschinen 28g, 28h sind Schweißmaschinen. Die Werkzeugmaschinen 28i, 28j sind Verpackstationen.

Die Werkzeugmaschinen 28a-28j sind in einer Werkzeugmaschinenmatrix 30 angeordnet. Mögliche Abfolgen der Bearbeitungsschritte 26 in der Werkzeugmaschinenmatrix 30 zur Herstellung des Blechbauteils 12 sind durch gestrichelte und durchgezogene Pfeile dargestellt.

Die Werkzeugmaschinenmatrix 30 kann Teil eines Algorithmus 32 sein. Der Algorithmus 32 kann ein neuronales Netz 34 aufweisen, das einen optimierten Produktionsgraph 36a durch die Werkzeugmaschinenmatrix 30 ermittelt. Dieser optimierte Produktionsgraph 36a ist in Fig. 1 mit durchgezogenen Pfeilen dargestellt.

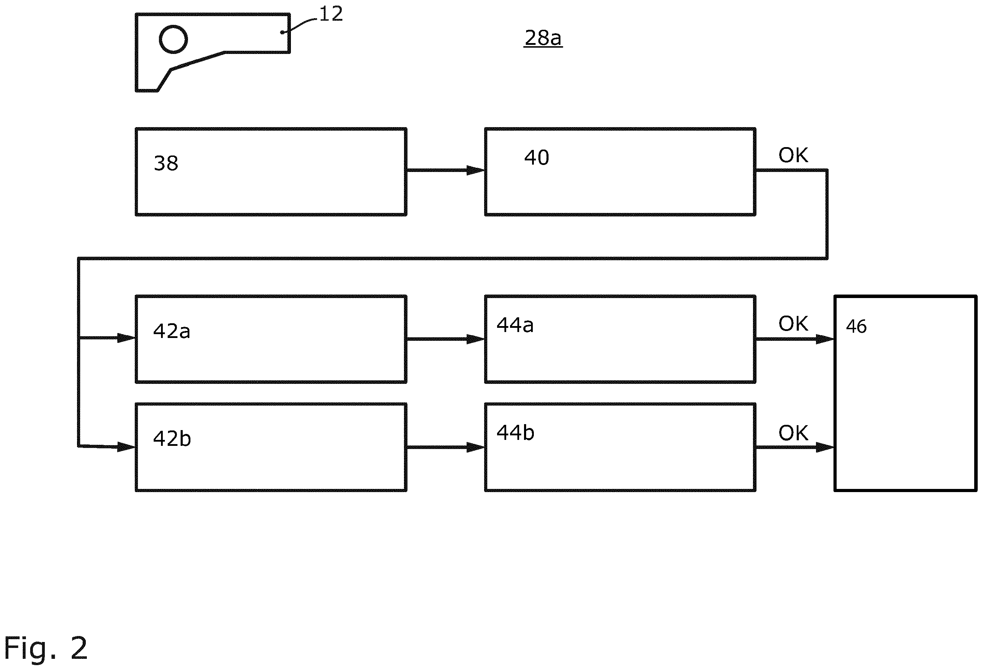

Fig. 2 zeigt einen Teil des Verfahrens 10, nämlich beispielhaft, anhand der Werkzeugmaschine 28a, das Auswahlverfahren zur Aufnahme der Werkzeugmaschinen 28a-28j in die Werkzeugmaschinenmatrix 30 gemäß Fig. 1. Dabei erfolgt ein Abgleich von Parametern des zu fertigenden Blechbauteils 12 mit Parametern der Werkzeugmaschine 28a.

Genauer gesagt wird zunächst die Grundeigenschaft 38 des Bearbeitungsschritts 16 (siehe Fig. 1) des zu fertigenden Blechbauteils 12, hier Laserschneiden, mit der Bearbeitungsgrundfähigkeit 40 der Werkzeugmaschine 28a, hier der Fähigkeit Laserschnitte durchzuführen, verglichen. Stimmt, wie im vorliegenden Fall, die Bearbeitungsgrundfähigkeit 40 mit der Grundeigenschaft 38 überein, werden Fähigkeitsparameter 42a, 42b des zu fertigenden Blechbauteils 12 mit Eigenschaftsparametern 44a, 44b der Werkzeugmaschine 28a verglichen. Fähigkeitsparameter 42a könnte beispielsweise das maximale Gewicht des zu fertigenden Blechbauteils 12 sein. Fähigkeitsparameter 42b könnte beispielsweise die maximale Länge des zu fertigenden Blechbauteils 12 sein. Entsprechend wären der Eigenschaftsparameter 44a das Gewicht und der Eigenschaftsparameter 44b die Länge des zu fertigenden Blechbauteils 12. Liegen die beiden Eigenschaftsparameter 44a, 44b innerhalb der Fähigkeitsparameter 42a, 42b, so wird in einem Aufnahmeschritt 46 die Werkzeugmaschine 28a in die Werkzeugmaschinenmatrix 30 (siehe Fig. 1) zu dem Bearbeitungsschritt "Laserschneiden" 16 eingefügt.

Die Eigenschaftsparameter 44a, 44b können Herstellerdaten umfassen. Die Herstellerdaten können die Produktionsfähigkeiten des Herstellers, das Preis-Leistungsverhältnis seiner Produkte, die Qualität seiner Produkte, seine Liefertermintreue und/oder die Industriezweige seiner Kunden umfassen. Hierdurch kann abgeglichen werden, ob die Werkzeugmaschine 28a dieses Herstellers für die Bearbeitung des zu fertigenden Bauteils 12 in Frage kommt. Der Algorithmus 32 kann dazu ausgebildet sein, gleichartige Werkzeugmaschinen 28a-28j (siehe Fig. 1) verschiedener Hersteller zu vergleichen, um die Herstellerdaten beim Auffinden des optimierten Produktionsgraphs 36a (siehe Fig. 1) zu ermitteln.

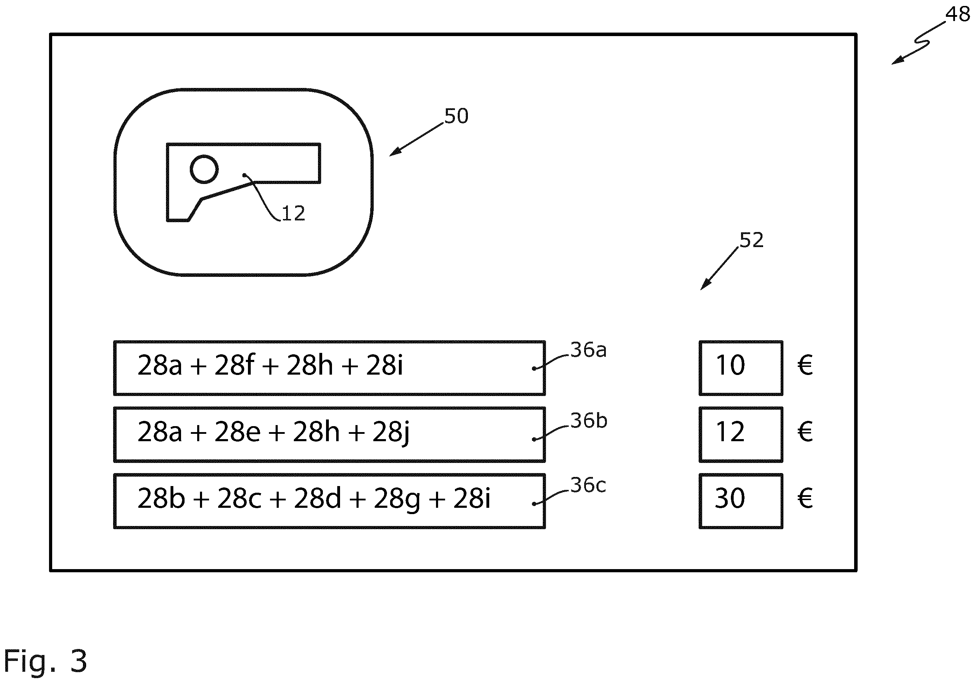

Fig. 3 zeigt eine online-Plattform 48. Die online-Plattform 48 ist in Form eines online-Marktplatzes ausgebildet. Sie weist eine Eingabe-Schnittstelle 50 zum Einlesen von Daten des zu fertigenden Bauteils 12 auf. Über die Eingabe-Schnittstelle 50 können alternativ oder zusätzlich dazu Werkzeugmaschinendaten und/oder Herstellerdaten eingelesen werden. Die online-Plattform 48 weist weiterhin eine Ausgabe-Schnittstelle 52 auf. Nach Ausführung des Algorithmus 32 (siehe Fig. 1) können Produktionsgraphen 36a-36c mit den zugehörigen gesamten Bearbeitungskosten des zu fertigenden Bauteils 12 bei Annahme der jeweiligen Produktionsgraphen 36a-36c ausgegeben werden. Die verschiedenen Produktionsgraphen 36a-36c repräsentieren die Fertigung bei verschiedenen Herstellern. Die jeweiligen Produktionsgraphen 36a-36c können zur Bestellung des zu fertigenden Bauteils 12 über den jeweiligen Produktionsgraphen 36a-36c vom Nutzer der online-Plattform 48 anwählbar sein.

Unter Vornahme einer Zusammenschau aller Figuren der Zeichnung betrifft die Erfindung zusammenfassend ein Verfahren 10 zur Steuerung einer Blechbearbeitung mit mehreren Bearbeitungsschritten 26, wobei zumindest ein Produktionsgraph 36a-36c in einer Werkzeugmaschinenmatrix 30 erstellt wird, in der den einzelnen Bearbeitungsschritten 26 jeweils zumindest eine zur Durchführung des jeweiligen Bearbeitungsschritts 26 geeignete Werkzeugmaschine 28a-28j zugeordnet ist, wobei die Zuordnung durch einen Abgleich von Bearbeitungsgrundfähigkeiten 40 der jeweiligen Werkzeugmaschine 28a-28j und deren Fähigkeitsparametern 42a, 42b mit den Grundeigenschaften 38 und Eigenschaftsparametern 44a, 44b der zu fertigenden Blechteile 12 erfolgt. Zur Eingabe der für das Verfahren 10 benötigten Daten und Ausgabe der vom Verfahren 10 erzeugten Daten kann eine online-Plattform 48, insbesondere in Form eines online-Marktplatzes mit Schnittstellen für mehrere Hersteller, vorgesehen sein.

### Bezugszeichenliste

- 10: Verfahren
- 12: Blechbauteil
- 14: Blechtafel
- 16: Laserschneiden
- 18: Entgraten
- 20: Biegen
- 22: Schweißen
- 24: Verpacken
- 26: Bearbeitungsschritte
- 28a-28j: Werkzeugmaschinen
- 30: Werkzeugmaschinenmatrix
- 32: Algorithmus
- 34: neuronales Netz
- 36a: optimierter Produktionsgraph
- 36b, 36c: weitere Produktionsgraphen
- 38: Grundeigenschaft
- 40: Bearbeitungsgrundfähigkeit
- 42a, 42b: Fähigkeitsparameter
- 44a, 44b: Eigenschaftsparameter
- 46: Aufnahmeschritt
- 48: online-Plattform
- 50: Eingabe-Schnittstelle
- 52: Ausgabe-Schnittstelle

## Patentansprüche

1. Verfahren (10) zur Steuerung einer Blechbearbeitung eines zu fertigenden Blechbauteils (12) mit mehreren Bearbeitungsschritten (26), wobei das Verfahren (10) folgende Verfahrensschritte aufweist:
A) Einlesen von Werkzeugmaschinendaten und Daten des zu fertigenden Blechbauteils (12);
wobei im Verfahrensschritt A) folgende Verfahrensschritte in beliebiger Reihenfolge oder gleichzeitig durchgeführt werden:
a) Einlesen der Bearbeitungsschritte (26) des zu fertigenden Blechbauteils (26);
b) Einlesen von Eigenschaftsparametern (44a, 44b) des zu fertigenden Blechbauteils (12);
c) Einlesen zumindest einer Bearbeitungsgrundfähigkeit (40) der Werkzeugmaschinen (28a-28j);
d) Einlesen der Fähigkeitsparameter (42a, 42b) der Werkzeugmaschinen (28a-28j);
B) Erstellen einer Werkzeugmaschinenmatrix (30) aus für die Fertigung des Blechbauteils (12) geeigneten Werkzeugmaschinen (28a-28j);
C) Bestimmen eines optimierten Bearbeitungsablaufs in Form einer Abfolge von Werkzeugmaschinen (28a-28j) aus der Werkzeugmaschinenmatrix (30);
D) Ausgeben des optimierten Bearbeitungsablaufs;
**dadurch gekennzeichnet, dass**
die Bearbeitungsschritte ein Trennen, ein Umformen, ein Schweißen oder ein Markieren sind;
wobei die Eigenschaftsparameter (44a, 44b) Abmessungen, Material oder Gewicht des Blechbauteils sind,
wobei im Verfahrensschritt B) folgende Verfahrensschritte durchgeführt werden:
e) Abgleichen der Bearbeitungsschritte (26) des Verfahrensschritts a) mit den Bearbeitungsgrundfähigkeiten (40) des Verfahrensschritts c);
f) für Fälle, in denen die Bearbeitungsgrundfähigkeiten (40) die Bearbeitungsschritte (26) erfüllen,
Abgleichen der Eigenschaftsparameter (44a, 44b) des Verfahrensschritts b) mit den Fähigkeitsparametern (42a, 42b) des Verfahrensschritts d);
g) für Fälle, in denen die Fähigkeitsparameter (42a, 42b) die Eigenschaftsparameter (44a, 44b) erfüllen,
Einfügen dieser Werkzeugmaschinen (28a-28j) in die Werkzeugmaschinenmatrix (30);
wobei die Verfahrensschritte e), f) und g) nacheinander oder gleichzeitig für die Werkzeugmaschinen (28a-28j) durchgeführt werden.

2. Verfahren nach Anspruch 1, bei dem die Bearbeitungsschritte (26) im Verfahrensschritt a) einem 3D-Modell des zu fertigenden Blechbauteils (12) und/oder Toleranzen entnommen werden, die in einer Zeichnung des zu fertigenden Blechbauteils (12) hinterlegt sind.

3. Verfahren nach einem der vorhergehenden Ansprüche, bei dem die Bearbeitungsschritte (26) hierarchisch in eine Hauptgruppe und zumindest eine Untergruppe unterteilt sind.

4. Verfahren nach einem der vorhergehenden Ansprüche, bei dem das Bestimmen des optimierten Bearbeitungsablaufs im Verfahrensschritt C) durch ein neuronales Netz (34) erfolgt, das mittels machine-learning trainiert ist.

5. Verfahren nach einem der vorhergehenden Ansprüche, bei dem das Ausgeben im Verfahrensschritt D) an ein manufacturing execution system erfolgt.

6. Verfahren nach einem der vorhergehenden Ansprüche, bei dem das Einlesen von Daten des zu fertigenden Blechbauteils (12) im Verfahrensschritt A) ein Erfassen einer Position des zu fertigenden Blechbauteils (12) mittels eines indoor-Lokalisierungssystems umfasst.

7. Verfahren nach einem der vorhergehenden Ansprüche, bei dem das Bestimmen des optimierten Bearbeitungsablaufs im Verfahrensschritt C) auf Grundlage minimierter gesamter Bearbeitungskosten, minimierter gesamter Bearbeitungszeit des zu fertigenden Blechbauteils (12) und/oder minimiertem gesamten Materialverbrauch erfolgt.

8. Verfahren nach einem der vorhergehenden Ansprüche, bei dem mehrere Werkzeugmaschinen (28a-28j) verschiedenen Herstellern zugeordnet sind, wobei die Werkzeugmaschinendaten Herstellerdaten umfassen und/oder bei dem sich mehrere Werkzeugmaschinen (28a-28j) an verschiedenen Produktionsstandorten befinden.

9. Verfahren nach Anspruch 8, bei dem die Herstellerdaten bei der Bestimmung des optimierten Bearbeitungsablaufs gemäß Verfahrensschritt C) berücksichtigt werden.

10. Verfahren nach Anspruch 8 oder 9, bei dem die Herstellerdaten folgende Daten umfassen:
• Einzelteilhersteller oder Baugruppenhersteller;
• Hersteller für Commodity-Blechbauteile;
• Hersteller für Schweißbaugruppen;
• Hersteller für Baugruppen mit Zukaufteilen;
• Maschinenpark des Herstellers;
• Qualität zuvor gefertigter Blechbauteile;
• Liefertreue;
• Liefergeschwindigkeit;
• Preis zuvor gefertigter Blechbauteile;
• Geschwindigkeit bei der Herstellung zuvor gefertigter Blechbauteile;
• Zertifizierung des Herstellers;
• Industriezweige der Kunden des Herstellers;
• Anzahl, Art und/oder Qualifikation der Mitarbeiter des Herstellers;
• Zukaufsdienstleistungen des Herstellers;
• Kapazität des Herstellers;
• Materialvorrat des Herstellers;
• genereller Vorzug des Herstellers.

11. Verfahren nach einem der Ansprüche 8 bis 10, wobei das Verfahren folgenden Verfahrensschritt aufweist:
E) Ergänzen der Herstellerdaten anhand der Beurteilung des gefertigten Blechbauteils.

12. Verfahren nach einem der vorhergehenden Ansprüche, bei dem das Ausgeben des optimierten Bearbeitungsablaufs im Verfahrensschritt D) das Ausgeben der gesamten Bearbeitungskosten umfasst,
wobei die Ermittlung der gesamten Bearbeitungskosten anhand eines Vergleichs mit tatsächlichen Marktpreisen von zuvor gefertigten gleichen oder ähnlichen Blechbauteilen erfolgt; und/oder
anhand einer Algorithmus-basierten Preiskalkulation des zu fertigenden Blechbauteils (12) erfolgt.

13. Verfahren nach einem der vorhergehenden Ansprüche, bei dem der Verfahrensschritt D) das Bestellen von Material zur Herstellung des Blechbauteils und/oder das Versenden des zu fertigenden Blechbauteils (12) nach einem Bearbeitungsschritt (26) umfasst.

14. Verfahren nach einem der vorhergehenden Ansprüche, bei dem das Verfahren (10) mit mehreren zu fertigenden Blechbauteilen (12) durchgeführt wird, wobei zumindest ein Bearbeitungsschritt (26) eines zu fertigenden Blechbauteils (12) verzögert wird, um gemeinsam mit anderen zu fertigenden Blechbauteilen (12) bearbeitet oder versendet zu werden.

15. Computerprogrammprodukt, umfassend Befehle, die bei der Ausführung eines Programms durch einen Computer diesen veranlassen, das Verfahren (10) nach einem der vorhergehenden Ansprüche auszuführen.

16. Computerprogrammprodukt nach Anspruch 15, bei dem das Computerprogrammprodukt eine online-Plattform (48) aufweist, wobei die online-Plattform (48) eine Eingabe-Schnittstelle (50) zur Eingabe von Werkzeugmaschinendaten und/oder Daten des zu fertigenden Blechbauteils (12) aufweist.

## Claims

1. A method (10) for controlling a sheet metal processing of a sheet metal component (12) to be manufactured, with a plurality of processing steps (26), wherein the method (10) has the following method steps:
A) reading in machine tool data and data of the sheet metal component (12) to be manufactured;
wherein in method step A), the following method steps are carried out in any desired order or simultaneously:
a) reading in the processing steps (26) of the sheet metal component (26) to be manufactured;
b) reading in property parameters (44a, 44b) of the sheet metal component (12) to be manufactured;
c) reading in at least one basic processing capability (40) of the machine tools (28a-28j);
d) reading in the capability parameters (42a, 42b) of the machine tools (28a-28j);
B) creating a machine tool matrix (30) made up of machine tools (28a-28j) suitable for manufacturing the sheet metal component (12);
C) determining an optimized processing procedure in the form of a sequence of machine tools (28a-28j) from the machine tool matrix (30);
D) outputting the optimized processing procedure;
**characterized in that**
the processing steps are a cutting, a shaping, a welding or a marking;
wherein the property parameters (44a, 44b) are dimensions, material or weight of the sheet metal component,
wherein in method step B), the following method steps are carried out:
e) comparing the processing steps (26) of method step a) with the basic processing capabilities (40) of method step c);
f) for cases in which the basic processing capabilities (40) fulfill the processing steps (26),
comparing the property parameters (44a, 44b) of method step b) with the capability parameters (42a, 42b) of method step d);
g) for cases in which the capability parameters (42a, 42b) fulfill the property parameters (44a, 44b),
adding these machine tools (28a-28j) to the machine tool matrix (30);
wherein method steps e), f) and g) are carried out one after the other or simultaneously for the machine tools (28a-28j).

2. The method according to claim 1, in which the processing steps (26) in method step a) are taken from a 3D model of the sheet metal component (12) to be manufactured and/or from tolerances which are stored in a drawing of the sheet metal component (12) to be manufactured.

3. The method according to one of the preceding claims, in which the processing steps (26) are subdivided hierarchically into a main group and at least one subgroup.

4. The method according to one of the preceding claims, in which the determining of the optimized processing procedure in method step C) takes place via a neural network (34) trained by means of machine learning.

5. The method according to one of the preceding claims, in which the outputting in method step D) takes place to a manufacturing execution system.

6. The method according to one of the preceding claims, in which the reading in of data of the sheet metal component (12) to be manufactured in method step A) comprises detecting, by means of an indoor localization system, a position of the sheet metal component (12) to be manufactured.

7. The method according to one of the preceding claims, in which the determining of the optimized processing procedure in method step C) takes place on the basis of minimized total processing costs, minimized total processing time of the sheet metal component (12) to be manufactured and/or minimized total material consumption.

8. The method according to one of the preceding claims, in which a plurality of machine tools (28a-28j) are assigned to different manufacturers, wherein the machine tool data comprises manufacturer data, and/or in which a plurality of machine tools (28a-28j) are located at different production sites.

9. The method according to claim 8 in which the manufacturer data are taken into account in the determining of the optimized processing procedure according to method step C).

10. The method according to claim 8 or 9 in which the manufacturer data comprises the following data:
• single part manufacturer or assembly manufacturer;
• manufacturer for commodity sheet metal components;
• manufacturer for welding assemblies;
• manufacturer for assemblies with purchased parts;
• machinery of the manufacturer;
• quality of previously manufactured sheet metal components;
• delivery reliability;
• delivery speed;
• price of previously manufactured sheet metal components;
• speed during the production of previously manufactured sheet metal components;
• certification of the manufacturer;
• industrial branches of the manufacturer's customers;
• number, kind and/or qualification of the manufacturer's employees;
• purchased services of the manufacturer;
• capacity of the manufacturer;
• material stock of the manufacturer;
• general preference of the manufacturer.

11. The method according to one of claims 8 to 10, wherein the method has the following method step:
E) supplementing the manufacturer data based on the assessment of the manufactured sheet metal component.

12. The method according to one of the preceding claims, in which the outputting of the optimized processing procedure in method step D) comprises the outputting of the total processing costs,
wherein the ascertaining of the total processing costs takes place based on a comparison with actual market prices of identical or similar sheet metal components manufactured previously; and/or
based on an algorithm-based price calculation of the sheet metal component (12) to be manufactured.

13. The method according to one of the preceding claims in which method step D) comprises the ordering of material for producing the sheet metal component and/or shipping the sheet metal component (12) to be manufactured after a processing step (26).

14. The method according to one of the preceding claims in which method (10) is carried out with a plurality of sheet metal components (12) to be manufactured, wherein at least one processing step (26) of a sheet metal component (12) to be manufactured is delayed in order to be processed or shipped jointly with other sheet metal components (12) to be manufactured.

15. A computer program product, comprising commands which, during execution of a program by a computer, cause the computer to execute the method (10) according to one of the preceding claims.

16. The computer program product according to claim 15 in which the computer program product has an online platform (48), wherein the online platform (48) has an input interface (50) for inputting machine tool data and/or data of the sheet metal component (12) to be manufactured.

## Revendications

1. Procédé (10) de commande d'un travail de la tôle d'une pièce en tôle (12) à fabriquer avec plusieurs étapes de travail (26), dans lequel le procédé (10) comporte les étapes de procédé suivantes :
A) la lecture de données de machines-outils et de données de la pièce en tôle (12) à fabriquer ;
dans lequel, dans l'étape de procédé A), les étapes de procédé suivantes sont mises en œuvre dans un ordre quelconque ou simultanément :
a) la lecture des étapes de travail (26) de la pièce en tôle (26) à fabriquer ;
b) la lecture de paramètres caractéristiques (44a, 44b) de la pièce en tôle (12) à fabriquer ;
c) la lecture d'au moins une capacité fondamentale de travail (40) des machines-outils (28a-28j) ;
d) la lecture des paramètres de capacité (42a, 42b) des machines-outils (28a-28j) ;
B) l'établissement d'une matrice de machines-outils (30) à partir des machines-outils (28a-28j) adaptées à la fabrication de la pièce en tôle (12) ;
C) la détermination d'une séquence de travail optimisée sous la forme d'une succession de machines-outils (28a-28j) issues de la matrice de machines-outils (30) ;
D) la restitution de la séquence de travail optimisée ;
**caractérisé en ce que**
les étapes de travail consistent en une séparation, un formage, un soudage ou un marquage ;
dans lequel les paramètres caractéristiques (44a, 44b) sont des dimensions, un matériau ou un poids de la pièce en tôle,
dans lequel, dans l'étape de procédé B), les étapes de procédé suivantes sont mises en œuvre :
e) la comparaison des étapes de travail (26) de l'étape de procédé a) avec les capacités fondamentales de travail (40) de l'étape de procédé c) ;
f) pour les cas où les capacités fondamentales de travail (40) répondent aux étapes de travail (26),
la comparaison des paramètres caractéristiques (44a, 44b) de l'étape de procédé b) avec les paramètres de capacité (42a, 42b) de l'étape de procédé d) ;
g) pour les cas où les paramètres de capacité (42a, 42b) répondent aux paramètres caractéristiques (44a, 44b),
l'insertion de ces machines-outils (28a-28j) dans la matrice de machines-outils (30) ;
dans lequel les étapes de procédé e), f) et g) sont mises en œuvre successivement ou simultanément pour les machines-outils (28a-28j).

2. Procédé selon la revendication 1, au cours duquel les étapes de travail (26) de l'étape de procédé a) sont extraites d'un modèle 3D de la pièce en tôle (12) à fabriquer et/ou de tolérances, qui sont consignées dans un dessin de la pièce en tôle (12) à fabriquer.

3. Procédé selon l'une quelconque des revendications précédentes, au cours duquel les étapes de travail (26) sont hiérarchiquement subdivisées en un groupe principal et au moins un sous-groupe.

4. Procédé selon l'une quelconque des revendications précédentes, au cours duquel la détermination de la séquence de travail optimisée dans l'étape de procédé C) est réalisée par un réseau neuronal (34), qui est entraîné au moyen d'un apprentissage automatique.

5. Procédé selon l'une quelconque des revendications précédentes, au cours duquel la restitution dans l'étape de procédé D) est réalisée à un système d'exécution de fabrication (manufacturing execution system).

6. Procédé selon l'une quelconque des revendications précédentes, au cours duquel la lecture de données de la pièce en tôle (12) à fabriquer dans l'étape de procédé A) comprend la détection d'une position de la pièce en tôle (12) à fabriquer au moyen d'un système de localisation en intérieur.

7. Procédé selon l'une quelconque des revendications précédentes, au cours duquel la détermination de la séquence de travail optimisée dans l'étape de procédé C) est réalisée sur la base de coûts de travail globaux minimisés, d'un temps de travail global minimisé de la pièce en tôle (12) à fabriquer et/ou d'une consommation de matériau globale minimisée.

8. Procédé selon l'une quelconque des revendications précédentes, au cours duquel plusieurs machines-outils (28a-28j) sont attribuées à différents fabricants, dans lequel les données de machines-outils comprennent des données de fabricant, et/ou au cours duquel plusieurs machines-outils (28a-28j) se trouvent sur différents sites de production.

9. Procédé selon la revendication 8, au cours duquel les données de fabricant sont prises en compte lors de la détermination de la séquence de travail optimisée conformément à l'étape de procédé C).

10. Procédé selon la revendication 8 ou 9, au cours duquel les données de fabricant comprennent les données suivantes :
• fabricant de pièces unitaires ou fabricant de sous-ensembles ;
• fabricant de pièces en tôle standardisées (commodity) ;
• fabricant de sous-ensembles soudés ;
• fabricant de sous-ensembles avec pièces achetées en externe ;
• parc machines du fabricant ;
• qualité de pièces en tôle fabriquées antérieurement ;
• fiabilité des livraisons ;
• rapidité des livraisons ;
• prix de pièces en tôle fabriquées antérieurement ;
• vitesse de fabrication de pièces en tôle fabriquées antérieurement ;
• certification du fabricant ;
• secteurs industriels des clients du fabricant ;
• nombre, type et/ou qualification des employés du fabricant ;
• services achetés en externe du fabricant ;
• capacité du fabricant ;
• stock de matériaux du fabricant ;
• préférence générale pour le fabricant.

11. Procédé selon l'une quelconque des revendications 8 à 10, dans lequel le procédé comporte l'étape de procédé suivante :
E) l'enrichissement des données de fabricant en se fondant sur l'évaluation de la pièce en tôle fabriquée.

12. Procédé selon l'une quelconque des revendications précédentes, au cours duquel la restitution de la séquence de travail optimisée dans l'étape de procédé D) comprend la restitution des coûts de travail globaux,
dans lequel la détermination des coûts de travail globaux est réalisée en se fondant sur une comparaison avec des prix de marché réels de pièces en tôle identiques ou similaires fabriquées antérieurement ; et/ou
est réalisée en se fondant sur un calcul de prix basé sur un algorithme pour la pièce en tôle (12) à fabriquer.

13. Procédé selon l'une quelconque des revendications précédentes, au cours duquel l'étape de procédé D) comprend la commande de matériau pour la fabrication de la pièce en tôle et/ou l'expédition de la pièce en tôle (12) à fabriquer après une étape de travail (26).

14. Procédé selon l'une quelconque des revendications précédentes, au cours duquel le procédé (10) est mis en œuvre avec plusieurs pièces en tôle (12) à fabriquer, dans lequel au moins une étape de travail (26) d'une pièce en tôle (12) à fabriquer est différée afin d'être travaillée ou expédiée conjointement avec d'autres pièces en tôle (12) à fabriquer.

15. Produit programme informatique, comprenant des instructions qui, lors de l'exécution d'un programme par un ordinateur, amènent ce dernier à exécuter le procédé (10) selon l'une quelconque des revendications précédentes.

16. Produit programme informatique selon la revendication 15, au cours duquel le produit programme informatique comporte une plateforme en ligne (48), dans lequel la plateforme en ligne (48) comporte une interface de saisie (50) pour la saisie de données de machines-outils et/ou de données de la pièce en tôle (12) à fabriquer.
